# EUROPÄISCHE PATENTSCHRIFT

(11) **EP 0 759 375 B1**
(45) Veröffentlichungstag und Bekanntmachung des Hinweises auf die Patenterteilung: **31.10.2001**
(21) Anmeldenummer: 96112416.1
(22) Anmeldetag: 01.08.1996
(51) Int. Cl.: B60N 2/06

(54) **Führungsschieneneinrichtung für einen Fahrzeugsitz**
Rail guide device for a vehicle seat
Dispositif de rail de guidage pour un siège de véhicule

(30) Priorität: 17.08.1995 DE 19530266
(43) Veröffentlichungstag der Anmeldung: 26.02.1997
(73) Patentinhaber: GRAMMER AG, 92224 Amberg (DE)
(72) Erfinder: Meier, Johann, 92269 Fensterbach/Wolfring (DE); Hartl, Paul, 92245 Kümmersbruck (DE)
(74) Vertreter: LOUIS, PÖHLAU, LOHRENTZ & SEGETH

(56) Entgegenhaltungen:
- EP-A- 0 524 053
- FR-A- 1 565 545
- GB-A- 405 954
- JP-A- 7 329 616
- US-A- 3 759 587
- US-A- 4 756 503
- US-A- 5 370 350

## Beschreibung

Die Erfindung betrifft eine für einen Fahrzeugsitz vorgesehene Führungsschieneneinrichtung mit einem ersten und einem zweiten Schienenteil, wobei das erste Schienenteil ein U-Profil mit einem Grundteil und zwei Schenkelteilen aufweist, die jeweils mit einem nach außen orientierten, umgekehrt U-förmigen Randprofil ausgebildet sind, und wobei das zweite Schienenteil ein umgekehrtes U-Profil mit einem Grundteil und zwei Schenkelteilen aufweist, welche die beiden umgekehrt U-förmigen Randprofile des ersten Schienenteils umgreifen, wobei das jeweilige Schenkelteil des zweiten Schienenteiles mit einem U-förmigen Randprofil ausgebildet ist und das jeweilige umgekehrt U-förmige Randprofil des ersten Schienenteiles und das zugehörige U-förmige Randprofil des zweiten Schienenteiles ineinandergreifen, und wobei das erste und das zweite Schienenteil an jeder seiner beiden Seiten mit einem Berührungsabschnitt ausgebildet ist, entlang welchen das erste und das zweite Schienenteil zur gegenseitigen spielfreien Führung aneinander linienartig anliegen.

Aus der DE 28 20 151 C2 ist eine Führungsschieneneinrichtung bekannt, bei welcher zwischen dem ersten und dem zweiten Schienenteil Kugeln oder Rollen vorgesehen sind. Die Anordnung der Kugeln oder Rollen zwischen den beiden Schienenteilen bedingt einen nicht zu vernachlässigenden Herstellungsaufwand.

Eine Führungsschieneneinrichtung der eingangs genannten Art ist aus der EP 0 524 053 B1 bekannt. Bei dieser bekannten Führungsschieneneinrichtung sind zwischen dem ersten und dem zweiten Schienenteil ebenfalls Kugeln angeordnet, so dass bezüglich der Montageeigenschaften die gleichen Mängel bestehen wie bei der oben beschriebenen Führungsschieneneinrichtung gemäss DE 28 20 151 C2. Ausserdem ist die Führungsschieneneinrichtung gemäss EP 0 524 053 B1 mit Dämpfungseinrichtungen bildenden Profilelementen versehen. Auch die Montage diese Profilelemente stellt einen nicht zu vernachlässigenden Montageaufwand dar.

Aus der GB-A-405 954 ist eine weitere Führungsschieneneinrichtung bekannt, deren Schienen an zwei symmetrisch angeordneten Stellen linienartig in Kontakt sind, um die relative Bewegung dieser Schienen zu gewährleisten.

Der Erfindung liegt die Aufgabe zugrunde, eine Führungsschieneneinrichtung der eingangs genannten Art zu schaffen, bei welcher der Herstellungsaufwand vergleichsweise klein ist, ohne daß hierdurch die Verstelleigenschaften oder die Festigkeitseigenschaften der Führungsschieneneinrichtung beeinträchtigt werden.

Diese Aufgabe wird bei einer Führungsschieneneinrichtung der eingangs genannten Art erfindungsgemäß dadurch gelöst, daß zwei erste Berührungsabschnitte zwischen dem jeweiligen Schenktelteil des ersten Schienenteiles und dem zugehörigen U-förmigen Randprofil des zweiten Schienenteiles und dass zwei zweite Berührungsabschnitte zwischen dem jeweiligen umgekehrt U-förmigen Randprofil des ersten Schienenteiles und dem Grundteil des zweiten Schienenteiles ausgebildet sind, wobei die Berührungsabschnitte durch in Schienenlängsrichtung verlaufende Wölbungsabschnitte festgelegt sind, die an den Schenkelteilen und an den umgekehrt U-förmigen Randprofilen des ersten Schienenteiles ausgebildet sind.

Durch die erfindungsgemässe Ausbildung der Führungsschieneneinrichtung ist es in vorteilhafter Weise möglich, Abmessungstoleranzen im Querschnittsprofil des ersten und/oder des zweiten Schienenteils auf einfache Weise auszugleichen. Durch die mehrfache linienartige Anlage zwischen erstem und zweitem Schienenteil ergibt sich außerdem der Vorteil einer relativ reibungsarmen linearen Führung der beiden Schienenteil in bezug zueinander. Mit erfindungsgemäßen Führungsschieneneinrichtungen ausgerüstete Fahrzeugsitze sind also kraftsparend in ihrer Längsrichtung verstellbar. Erfindungsgemäß ist auch die Festigkeit in vertikaler Richtung und somit das Crashverhalten der erfindungsgemäßen Führungsschieneneinrichtung sehr gut.

Dadurch, dass bei der erfindungsgemäßen Führungsschieneneinrichtung die beiden ersten Berührungsabschnitte zwischen dem jeweiligen Schenkelteil des ersten Schienenteiles und dem zugehörigen U-förmigen Randprofil des zweiten Schienenteiles und die beiden zweiten Berührungsabschnitte zwischen dem jeweiligen umgekehrt U-förmigen Randabschnitt des ersten Schienenteils und dem Grundteil des zweiten Schienenteiles ausgebildet sind, bilden die ersten Berührungsabschnitte eine spielfreie Führung in Querrichtung der Führungsschieneneinrichtung. Die beiden zweiten Berührungsabschnitte nehmen die Gewichtsbelastung auf die jeweilige Führungsschieneneinrichtung auf.

Die Berührungsabschnitte können durch in Schienenlängsrichtung verlaufende Wölbungsabschnitte festgelegt sein. Diese Wölbungsabschnitte können im ersten Schienenteil ausgebildet sein. Vorzugsweise sind die Wölbungsabschnitte an den Schenkelteilen und an den umgekehrt U-förmigen Randprofilen des ersten Schienenteiles ausgebildet.

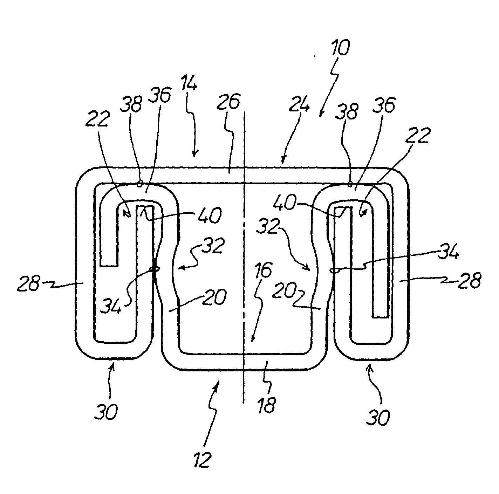

Ein Ausführungsbeispiel der erfindungsgemäßen Führungsschieneneinrichtung ist in der Zeichnung in einem vergrößerten Maßstab im Querschnittsprofil dargestellt und wird nachfolgend beschrieben.

Die Zeichnung zeigt eine Ausbildung der erfindungsgemäßen Führungsschieneneinrichtung 10 mit einem ersten Schienenteil 12 und mit einem zweiten Schienenteil 14. Das erste Schienenteil 12 weist ein U-Profil 16 mit einem Grundteil 18 und mit zwei vom Grundteil 18 nach oben stehenden Schenkelteilen 20 auf. Jedes der beiden Schenkelteile 20 ist mit einem nach außen orientierten, umgekehrt U-förmigen Randprofil 22 ausgebildet.

Das zweite Schienenteil 14 weist ein umgekehrt U-förmiges Profil 24 mit einem Grundteil 26 und mit zwei Schenkelteilen 28 auf. Die beiden Schenkelteile 28 umgreifen die beiden umgekehrt U-förmigen Randprofile 22 des ersten Schienenteiles 12. Die beiden Schenkelteile 28 des zweiten Schienenteils 14 sind mit U-förmigen Randprofilen 30 ausgebildet und derartig dimensioniert, daß die U-förmigen Randprofile 30 des zweiten Schienenteiles 14 und die umgekehrt U-förmigen Randprofile 22 des ersten Schienenteiles 12 ineinandergreifen.

Die beiden Schenkelteile 20 des ersten Schienenteiles 12 sind jeweils mit einem nach außen gewölbten Wölbungsabschnitt 32 ausgebildet, die in Längsrichtung des ersten Schienenteiles 12 orientiert sind. Durch diese Wölbungsabschnitte 32 ergibt sich zwischen dem ersten und dem zweiten Schienenteil 12 und 14 jeweils ein erster quasi linienförmiger Berührungsabschnitt 34. Diese beiden ersten Berührungsabschnitte 34 ergeben zwischen dem ersten und dem zweiten Schienenteil 12 und 14 der Führungsschieneneinrichtung 10 in Querrichtung derselben eine Spielfreiheit.

Das erste Schienenteil 12 ist außerdem an seinen beiden umgekehrt U-förmigen Randprofilen 22 jeweils mit einem Wölbungsabschnitt 36 ausgebildet. Durch diese beiden Wölbungsabschnitte 36 ergibt sich jeweils ein quasi linienartiger zweiter Berührungsabschnitt 38 zwischen dem ersten und dem zweiten Schienenteil 12 und 14 der Führungsschieneneinrichtung 10. Die beiden zweiten Berührungsabschnitte 38 ergeben in vertikaler Richtung der Führungsschieneneinrichtung 10 eine entsprechende Spielfreiheit.

Im Falle eines Crash's ergibt sich zwischen den beiden Wölbungsabschnitten 36 des ersten Schienenteiles 12 und den Innenrändern 40 der U-förmigen Randprofile 30 des zweiten Schienenteiles 14 eine entsprechende Berührung, wobei durch die ineinandergreifenden U-Profile des ersten und des zweiten Schienenteiles 12 und 14 gleichsam ein Verkrallen der beiden Schienenteile 12, 14 bewirkt wird.

## Patentansprüche

1. Für einen Fahrzeugsitz vorgesehene Führungsschieneneinrichtung mit einem ersten und einem zweiten Schienenteil (12, 14), wobei das erste Schienenteil (12) ein U-Profil (16) mit einem Grundteil (18) und zwei Schenkelteilen (20) aufweist, die jeweils mit einem nach außen orientierten umgekehrt U-förmigen Randprofil (22) ausgebildet sind, und wobei das zweite Schienenteil (14) ein umgekehrtes U-Profil (24) mit einem Grundteil (26) und zwei Schenkelteilen (28) aufweist, welche die beiden umgekehrt U-förmigen Randprofile (22) des ersten Schienenteiles (12) umgreifen, wobei das jeweilige Schenkelteil (28) des zweiten Schienenteiles (14) mit einem U-förmigen Randprofil (30) ausgebildet ist und das jeweilige umgekehrt U-förmige Randprofil (22) des ersten Schienenteils (12) und das zugehörige U-förmige Randprofil (30) des zweiten Schienenteiles (14) ineinandergreifen, und wobei das erste und das zweite Schienenteil (12, 14) an jeder seiner beiden Seiten mit einem Berührungsabschnitt (34, 38) ausgebildet ist, entlang welchen das erste und das zweite Schienenteil (12, 14) zur gegenseitigen spielfreien Führung aneinander linienartig anliegen,
**dadurch gekennzeichnet,**
**daß** zwei erste Berührungsabschnitte (34) zwischen dem jeweiligen Schenkelteil (20) des ersten Schienenteiles (12) und dem zugehörigen U-förmigen Randprofil (30) des zweiten Schienenteils (14) und daß zwei zweite Berührungsabschnitte (38) zwischen dem jeweiligen umgekehrt U-förmigen Randprofil (22) des ersten Schienenteiles (12) und dem Grundteil (26) des zweiten Schienenteils (14) ausgebildet sind, wobei die Berührungsabschnitte (34, 38) durch in Schienenlängsrichtung verlaufende Wölbungsabschnitte (32, 36) festgelegt sind,die an den Schenkelteilen (20) und an den umgekehrt U-förmigen Randprofilen (22) des ersten Schienenteiles (12) ausgebildet sind.

## Claims

1. Guide rail device provided for a vehicle seat, having a first and a second rail part (12, 14); the first rail part (12) having a U-profile (16) with a base part (18) and two limb parts (20) which are each designed with an inverted U-shaped edge profile (22) which is orientated outwards, and the second rail part (14) having an inverted U-profile (24) with a base part (26) and two limb parts (28) which engage around the two inverted U-shaped edge profiles (22) of the first rail part (12), the respective limb part (28) of the second rail part (14) being designed with a U-shaped edge profile (30), and the respective, inverted U-shaped edge profile (22) of the first rail part (12) and the associated, U-shaped edge profile (30) of the second rail part (14) interlocking; and each of the two sides of the first and the second rail part (12, 14) being designed with a contact section (34, 38) along which the first and the second rail part (12, 14) bear linearly against each other for mutual, play-free guidance, **characterized in that** two first contact sections (34) are formed between the respective limb part (20) of the first rail part (12) and the associated, U-shaped edge profile (30) of the second rail part (14); and **in that** two second contact sections (38) are formed between the respective, inverted U-shaped edge profile (22) of the first rail part (12) and the base part (26) of the second rail part (14), the contact sections (34, 38) being secured by curved sections (32, 36) which run in the longitudinal direction of the rails and are formed on the limb parts (20) and on the inverted, U-shaped edge profiles (22) of the first rail part (12).

## Revendications

1. Système de rails de guidage destiné à un siège de véhicule, du type se composant d'un premier et d'un second rail (12, 14), le premier rail (12) ayant un profil en U (16) avec un fond (18) et deux bras (20), présentant chacun un bord en forme de U renversé (22) orienté vers l'extérieur et le second rail (14) présentant un profil en U renversé (24) avec un fond (26) et deux bras (28) qui s'accrochent, en les entourant, aux deux bords en U renversé (22) du premier rail (12), chaque bras (28) du second rail (14) ayant des bords en U (30) et chaque bord en U renversé (22) du premier rail (12) et le bord en U (30) correspondant du second rail (14) s'accrochant l'un dans l'autre et le premier et le second rail (12, 14) présentant à chacun de leurs deux côtés une section de contact (34, 38) le long de laquelle le premier et le second rail (12, 14) sont situés l'un contre l'autre, en vue d'un guidage linéaire mutuel sans jeu, **caractérisé en ce que** sont prévues deux premières zones de contact (34) entre chaque bras (20) du premier rail (12) et le bord en U (30) correspondant du second rail (14) et deux zones de contact (38) entre chaque bord en U renversé (22) du premier rail (12) et le fond (26) du second rail (14), les zones de contact (34, 38) étant déterminées par des sections bombées (32, 36) s'étendant dans la direction longitudinale des rails, et créées sur les bras (20) et les bords en forme de U renversé (22) du premier rail (12).
